**Europäisches Patentamt**

**European Patent Office**

**Office européen des brevets**

(19)

(11) Veröffentlichungsnummer: **0 144 555**
**A2**

(12) **EUROPÄISCHE PATENTANMELDUNG**

(21) Anmeldenummer: **84110594.3**

(22) Anmeldetag: **06.09.84**

(51) Int. Cl.⁴: **G 01 F 1/22**
G 01 F 1/28, G 01 F 1/42

(30) Priorität: **05.10.83 DE 3336161**
**06.07.84 DE 3424870**

(43) Veröffentlichungstag der Anmeldung:
**19.06.85 Patentblatt 85/25**

(84) Benannte Vertragsstaaten:
**AT BE CH DE FR GB IT LI NL SE**

(71) Anmelder: **Kobold, Klaus**
**Sodener Strasse 120**
**D-6233 Kelkheim(DE)**

(72) Erfinder: **Kobold, Klaus**
**Sodener Strasse 120**
**D-6233 Kelkheim(DE)**

(74) Vertreter: **Keil, Rainer A., Dipl.-Phys. Dr. et al,**
**Patentanwälte KEIL & SCHAAFHAUSEN**
**Ammelburgstrasse 34**
**D-6000 Frankfurt am Main 1(DE)**

(54) **Schwebekörper-Durchflussmesser.**

(57) Die Erfindung betrifft einen Schwebekörper-Durchflußmesser mit einem von dem zu messenden Medium zu durchströmenden rohrförmigen Gehäuse und einem in dem Gehäuse durch die Strömung des Mediums anhebbaren und innerhalb des Gehäuses axial geführten federbelasteten Schwebekörper, welcher einen - einen inneren axial durchgängigen Strömungskanal bildenden - Hohlzylinder aufweist, dessen engste Stelle von dem Loch einer Lochscheibe mit geringem, während der Axialbewegung des Schwebekörpers unverändert freien Lochquerschnitt gebildet ist. Zur Verringerung des Einflusses der Viskosität des Mediums auf das Meßergebnis ist im wesentlichen vorgesehen, daß für eine Durchflußmenge zwischen etwa 0, 1 und 5 l/min das Verhältnis von Lochstärke zu Lochdurchmesser nicht größer als 0, 5 und für eine Durchflußmenge zwischen etwa 2 und 20 l/min und darüber etwa gleich 1 ist.

EP 0 144 555 A2

0144555

KEIL & SCHAAFHAUSEN
PATENTANWÄLTE

K 3 P 8 EP

Frankfurt am Main

30.8.1984

Dipl.-Ing. Klaus Kobold

Sodener Straße 120

6233 Kelkheim

Schwebekörper-Durchflußmesser

Beschreibung:

Die Erfindung bezieht sich auf einen Schwebekörper-Durchflußmesser mit einem von dem zu messenden Medium zu durchströmenden rohrförmigen Gehäuse und einem in dem Gehäuse durch die
Strömung des Mediums anhebbaren und innerhalb des Gehäuses
unter Freihaltung eines ihn umgebenden Ringspaltes axial geführten federbelasteten Schwebekörper, welcher einen - einen
inneren axial durchgängigen Strömungskanal bildenden - Hohlyzlinder aufweist, dessen engste Stelle von dem Loch einer
Lochscheibe mit geringem, während der Axialbewegung des Schwebekörpers unverändert freien Lochquerschnitts gebildet ist.

Ein derartiger Schwebekörper-Durchflußmesser ist z.B. aus der
DE-PS 202 859 bekannt. Insbesondere bei Medien mit vergleichsweise hoher Viskosität leidet dessen Genauigkeit jedoch erheblich, insbesondere wenn sich die Viskosität unter Temperatureinwirkung ändert.

Aufgabe der vorliegenden Erfindung ist es, einen Schwebekörper-Durchflußmesser der eingangs genannten Art so auszugestalten, daß nachteilige Einflüsse der Viskosität und insbesondere temperaturbedingter Viskositätsänderungen besser als bisher vermieden sind.

Diese Aufgabe wird mit der Erfindung für einen Durchflußmengenbereich zwischen etwa 0,1 und 5 l/min im wesentlichen dadurch gelöst, daß das Verhältnis von Lochstärke zu Lochdurchmesser nicht größer als 0,5 ist.

Es hat sich gezeigt, daß mit dieser Lösung in dem genannten Durchflußmengenbereich unter weitgehender Ausschaltung von Viskositätseinflüssen eine bisher nicht erreichte Genauigkeit der Durchflußmessung erzielt werden kann. Wenn in diesem Zusammenhang von "geringem" Lochquerschnitt die Rede ist, so bedeutet dies, daß er wesentlich kleiner sein soll, als der Strömungsquerschnitt des übrigen inneren Strömungskanals des Schwebekörpers. Die geringe Lochstärke bedeutet, daß die axiale Länge der das Loch begrenzenden Wandung der Lochscheibe unter Berücksichtigung der Materialbeschaffenheit der Lochscheibe und der dadurch noch erzielbaren Steifigkeit im Vergleich zum Lochdurchmesser klein gewählt werden soll. Es hat sich überraschenderweise gezeigt, daß dadurch die Viskositätseinflüsse wesentlich besser ausgeschaltet werden können, als bisher.

Besonders gute Ergebnisse werden erzielt, wenn das Verhältnis von Lochstärke zu Lochdurchmesser zwischen 0,1 und 0,3, vorzugsweise bei etwa 0,2 liegt.

Bei einem Schwebekörper-Durchflußmesser der eingangs genannten Art wird die der Erfindung zugrundeliegende Aufgabe für einen Durchflußmengenbereich zwischen etwa 2 und 20 l/min und darüber im wesentlichen dadurch gelöst, daß das Verhältnis von
Lochstärke zu Lochdurchmesser etwa gleich 1 ist.

Die Lochstärke des Loches und damit die Stärke der Lochscheibe, wenn diese von einheitlicher Materialstärke ist, liegt
vorzugsweise zwischen 0,01 und 10 mm; es kann beispielsweise
Stahl oder Aluminium als Scheibenmaterial gewählt werden.

Einen entscheidenden Einfluß auf die Genauigkeit der Durchflußmessung hat dabei in Weiterbildung des Erfindungsgedankens die
Maßnahme, dem den Schwebekörper umgebenden Ringspalt eine
Breite zwischen 0,01 und 0,3 mm, vorzugsweise von etwa 0,05 mm
zu geben.

Von besonderem Vorteil bei der Lösung der gestellten Aufgabe
ist es, wenn das Verhältnis von Lochdurchmesser und Durchmesser der wirksamen Anströmkreisringfläche der Lochscheibe
zwischen 0,01 und 0,95 , vorzugsweise zwischen 0,04 und 0,4
liegt.

Überraschenderweise kann die Anzeigegenauigkeit noch weiter
verbessert werden, wenn die Lochberandung des Loches der Lochscheibe, vorzugsweise halbkreisförmig, abgerundet ist.

Die Lochscheibe ist bei einer besonders vorteilhaften Ausgestaltung des Erfindungsgedankens als gesondertes Bauteil in
dem Hohlzylinder austauschbar gehalten. Auf diese Weise ist
nicht nur eine Erstmontage des Schwebekörpers bei Verwendung
einfacher Bauteile wie dem Hohlzylinder und der Lochscheibe
möglich, eine Lochscheibe kann auch einfach gegen eine andere
mit einem abweichenden Lochquerschnitt ausgetauscht werden, um
so unter Berücksichtigung der Strömungsverhältnisse und der
Viskosität des zu messenden Mediums einen anderen Durchflußmeßbereich wählen zu können.

Die Eignung als Durchflußwächter hoher Genauigkeit zu dienen
wird noch weiter dadurch verbessert, daß in dem Hohlzylinder
in Strömungsrichtung vor und/oder hinter der Lochscheibe ein
oder mehrere, vorzugsweise axial magnetisierte, Magnetringe
mit einer Durchtrittsöffnung angeordnet sind, deren Innendurchmesser den Lochdurchmesser der Lochscheibe wesentlich übersteigt. Die Magnetringe können aneinanderliegend einen wesentlichen Teil der Länge des Schwebekörpers ausmachen, so daß bei einem zusätzlich in dem Gehäuse für den Schwebekörper angeordneten oberen Anschlag die elektro-optische Signaleinrichtung oberhalb eines Durchflußwertes immer angeschaltet bleibt und nur ausgeht, sobald ein vorgebbarer Durchflußwert unterschritten wird.

Wenn gemäß einer weiteren vorteilhaften Ausgestaltung die Lochscheibe als, vorzugsweise axial magnetisierte, Magnetscheibe ausgebildet ist, kann sie bei der axialen Bewegung des Schwebekörpers in dem Gehäuse auf einfache Weise der Betätigung eines auf der Außenseite des Gehäuses in vorgegebener Höhe angeordneten Schutzgaskontaktes dienen, der in dem Stromkreis einer elektro-optischen Signaleinrichtung liegt, und/oder der magnetischen Betätigung des Zeigers eines unmittelbar an dem Gehäuse angebrachten Zeigerinstruments. Der Durchflußmesser kann so ebenfalls gleichzeitig als Durchflußwächter dienen.

Als magnetisierbares Material eignen sich in diesem Zusammenhang solche auf der Basis von Cr/Co/Fe bzw. Al/Ni/Co, Co/Sm (z.B. $Co_5Sm$), Pt/Co, Oxidkeramik oder plastischer Magnetwerkstoff auf Kunststoffbasis.

Der Halterung der Lochscheibe und/oder des wenigstens einen Magnetringes dient vorzugsweise ein Stützring mit einer Durchtrittsöffnung, deren Innendurchmesser den Lochdurchmesser der Lochscheibe wesentlich übersteigt. Lochscheibe und/oder Magnetring können aber auch an einer Innenschulter des Hohlzylinders gehalten sein.

Der Stützring kann sich beispielsweise auf eine Innenschulter des Hohlzylinders abstützen, die vorzugsweise der Strömungsaustrittsöffnung des Hohlzylinders zugewandt ist.

Die Lochscheibe selbst kann in dem Hohlzylinder beispielsweise von einem Haltering mit einer Durchtrittsöffnung, deren Innendurchmesser den Lochdurchmesser der Lochscheibe wesentlich übersteigt, an der Innenschulter oder dem Stützring bzw. dem wenigstens einen Magnetring auf der der Strömungsaustrittsöffnung des Hohlzylinders zugewandten Seite anliegend in dem Hohlzylinder gehalten sein.

Der Haltering ist in den Hohlzylinder formschlüssig und kraftschlüssig einsetzbar, indem er beispielsweise einen äußeren Dichtungsring aufweist. Der Haltering kann auch verschraubt, verklebt, verschweißt, verlötet oder auf andere Weise axial festgelegt sein.

Zur Führung ist der Schwebekörper bei einem weiteren Erfindungsgedanken an einer Feder hängend und/oder sich auf einer Feder abstützend in dem über seine Länge mit im wesentlichen gleichen Innendurchmesser ausgestatteten Gehäuse axial verschieblich, aber mit nur durch den geringen Ringspalt bedingten radialen Spiel. Die Federn können auf Druck und/oder Zug belastet sein.

Die Feder bzw. die Federn nimmt bzw. nehmen das Gewicht des Schwebekörpers auf, was für niedrige Durchflußwerte von Vorteil ist. Mit zunehmender Strömung steigt die auf den Schwebekörper wirkende Gegenkraft, bis sich in Abhängigkeit von der Strömung ein neuer Gleichgewichtszustand ausbildet. Der Schwebekörper kommt dann zur Ruhe und zeigt den Durchfluß genau an.

Vorteilhafterweise ist die Feder eine konische Schraubenlinienfeder mit entsprechender Charakteristik. Hierdurch kann der
Meßbereich um einen Faktor von mehr als 2 gegenüber der Verwendung einer zylindrischen Schraubenlinienfeder erweitert
werden.

Strömungstechnisch erweist es sich bei kleinen Durchflußwerten
unter Umständen als günstig, wenn sich der Stützring anströmseitig, vorzugsweise von der Innenwandfläche des Hohlzylinders
bis zu seiner Durchtrittsöffnung, in Strömungsrichtung konisch
verjüngt.

Der Stützring kann ferner zur einfachen Montage auf seiner der
Strömungsaustrittsöffnung des Hohlzylinders zugewandten Seite
einen Zentrierkragen für den wenigstens einen Magnetring aufweisen.

Es liegt ferner im Rahmen der Erfindung, wenn der Stützring
und/oder der wenigstens eine Magnetring und/oder die Lochscheibe unter vernachlässigbarem radialen Spiel in das Innere
des Hohlzylinders einsetzbar und dort z.B. zwischen der Innenschulter und dem Haltering axial festlegbar sind. Hierdurch
läßt sich der Schwebekörper mit seinen verschiedenen Teilen
einfach montieren und die Lochscheibe einfach gegen eine
andere austauschen.

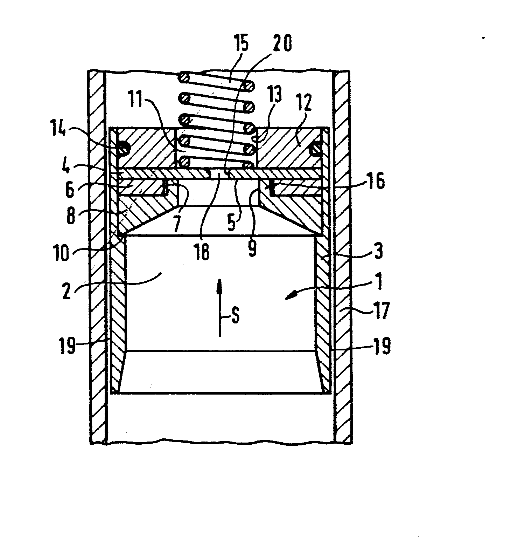

Weitere Ziele, Merkmale, Vorteile und Anwendungsmöglichkeiten
der vorliegenden Erfindung ergeben sich aus der nachfolgenden
Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung,
auch unabhängig von ihrer Zusammenfassung in den Ansprüchen
oder deren Rückbeziehung.

Die einzige Figur veranschaulicht im Vertikalschnitt einen die
Erfindung aufweisenden Schwebekörper in einem oben und unten
weggebrochenen rohrförmigen Gehäuse des Schwebekörper-Durchflußmessers.

Der Schwebekörper-Durchflußmesser hat ein senkrechtes von
unten nach oben von dem zu messenden Medium in Pfeilrichtung S
zu durchströmendes jedenfalls innen zylinderrohrförmiges
Gehäuse 17. Der Innendurchmesser des Gehäuses 17 ist in dem
dargestellten Ausführungsbeispiel über seine Länge im wesentlichen konstant. In dem Gehäuse 17 ist ein Schwebekörper 1
unter Freihaltung eines geringen ihn umgebenden Ringspalt 19
axial geführt. Der Schwebekörper 1 hat außen im wesentlichen
zylindrische Gestalt. Er weist einen Hohlzylinder 3 mit einem
inneren axial von unten nach oben durchgängigen Strömungskanal
2 auf. Die engste Stelle des Strömungskanals 2 wird von einem
eine halbkreisförmige Lochumrandung aufweisendes Loch 18 einer
Lochscheibe 4 gebildet. Der Lochquerschnitt ist während der
gesamten Axialbewegung des Schwebekörpers 1 unverändert frei.
Die Lochstärke, also im dargestellten Fall die Stärke der
Lochscheibe 4 oder wenigstens des das Loch 18 begrenzenden
Bereiches der Lochscheibe 4 ist unter Berücksichtigung der
Materialqualität der Lochscheibe 4 im Vergleich zum Lochdurchmesser gering. Das Loch 18 hat ferner einen im Vergleich zu
dem übrigen Strömungskanal 2 und insbesondere der wirksamen
Anströmkreisringfläche 5 der Lochscheibe 4 geringen Durchmesser.

Die Lochscheibe 4 ist als gesondertes Bauteil in dem Hohlzylinder 3 austauschbar gehalten. Zu diesem Zweck hat der
Hohlzylinder 3 eine Innenschulter 10, die der oberen Strömungsaustrittsöffnung 11 des Hohlzylinders 3 zugewandt ist.
Auf der Innenschulter 10 stützt sich ein Stützring 8 ab, der sich gemäß dem dargestellten Ausführungsbeispiel auf seiner Anströmseite von unten außen nach oben innen bis zu seiner Durchtrittsöffnung 9 konisch verjüngen kann. Der Innendurchmesser der Durchtrittsöffnung 9 übersteigt den Lochdurchmesser der Lochscheibe 4 aber noch wesentlich. Auf seiner der Strömungsaustrittsöffnung 11 zugewandten Seite hat der Stützring 8 einen Zentrierkragen 16 für die Aufnahme eines Magnetringes 6 mit einer Durchtrittsöffnung 7. Der Magnetring 6 dient bei der axialen Höhenverschiebung des Schwebekörpers 1 der Betätigung eines Schutzgaskontaktes einer elektro-optischen oder akustischen Signaleinrichtung und/oder des Zeigers eines Zeigerinstrumentes, welcher bzw. welches außen am Gehäuse 17 in vorgegebener Höhe angeordnet sein kann. Der Zentrierkragen 16 schließt mit der Oberseite des Magnetringes 6 bündig ab. Statt nur eines Magnetringes 6 können auch mehrere Magnetringe 6 axial übereinander in Strömungsrichtung vor oder hinter der Lochscheibe 4 angeordnet sein. Die Innenschulter 10 und der Stützring 8 sind dann entsprechend tiefer angeordnet. Auf dem Stützring 8 mit dem Magnetring 6 liegt die Lochscheibe 4 auf. Sie wird von oben axial unverschieblich von einem Haltering 12 gehalten, der aufgrund eines in einer Außenumfangsnut aufgenommenen Dichtungsringes 14 form- und kraftschlüssig in dem Hohlzylinder 3 festlegbar ist. Die Durchtrittsöffnung 13 des Halteringes 12, die mit der Strömungsaustrittsöffnung 11 übereinstimmt, hat ebenfalls einen Innendurchmesser, der den Lochdurchmesser der Lochscheibe 4 wesentlich übersteigt. In der Durchtrittsöffnung 13 ist ferner das untere Ende einer als Schraubenlinienfeder ausgebildeten Feder 15 aufgenommen, deren oberes Ende in einer entsprechenden Ausnehmung des oberen Schraubanschlusses des Gehäuses 17 festgelegt sein kann. Hergestellt ist eine zylindrische Schraubenlinienfeder; sie kann aber auch konisch sein. Auf diese Weise ist der Schwebekörper 1 in dem Gehäuse 17 aufgehängt. Der Schwebekörper 1 kann sich zusätzlich auf einer (nicht dargestellten) Feder nach unten abstützen. Er hebt sich unter der Strömung gegen die Wirkung der Feder 15 bis zu einem Gleichgewichtszustand an.

Die Außendurchmesser von Lochscheibe 4, Magnetring 6 und Stützring 8 sind nur geringfügig kleiner als der zugeordnete Innendurchmesser des Hohlzylinders 3 und dadurch zwischen Haltering 14 und Innenschulter 10 praktisch radial spielfrei gehalten.

In dem dargestellten Ausführungsbeispiel ist aufgrund des an dem Stützring 8 vorgesehenen Einlaufkonus der Innendurchmesser der Durchtrittsöffnung 9 wesentlich geringer als der Innendurchmesser des Hohlzylinders 3, ebenso die Innendurchmesser der Durchtrittsöffnungen 7, 13 von Magnetring 6 und Haltering 12. Bei größeren Durchflußwerten kann der Einlaufkonus entfallen. Dann sind die Innendurchmesser der Durchtrittsöffnungen 7, 9, 13 nur geringfügig kleiner als der Innendurchmesser des Hohlzylinders 3 selbst.

Bezugszeichenliste:

1    Schwebekörper

2    Strömungskanal

3    Hohlzylinder

4    Lochscheibe

5    Anströmkreisringfläche

6    Magnetring

7    Durchtrittsöffnung

8    Stützring

9    Durchtrittsöffnung

10   Innenschulter

11   Strömungsaustrittsöffnung

12   Haltering

13   Durchtrittsöffnung

14   Dichtungsring

15   Feder

16   Zentrierkragen

17   Gehäuse

18   Loch

19   Ringspalt

20   Lochberandung

**0144555**

KEIL & SCHAAFHAUSEN
PATENTANWÄLTE

K 3 PG 8

Frankfurt am Main
30.8.1984

Dipl.-Ing. Klaus Kobold

Sodener Straße 120

6233 Kelkheim

Schwebekörper-Durchflußmesser

Ansprüche:

1. Schwebekörper-Durchflußmesser mit einem von dem zu messenden Medium zu durchströmenden rohrförmigen Gehäuse (17) und einem in dem Gehäuse (17) durch die Strömung des Mediums anhebbaren und innerhalb des Gehäuses (17) unter Freihaltung eines ihn umgebenden Ringspaltes axial geführten federbelasteten Schwebekörper (1), welcher einen einen inneren axial durchgängigen Strömungskanal (2) bildenden Hohlzylinder (3) aufweist, dessen engste Stelle von dem Loch (18) einer Lochscheibe (4) mit geringem, während der Axialbewegung des Schwebekörpers (1) unverändert freien Lochquerschnitt gebildet ist, dadurch gekennzeichnet, daß für einen Durchflußmengenbereich zwischen etwa 0,1 und 5 1/min das Verhältnis von Lochstärke zu Lochdurchmesser nicht größer als 0,5 ist.

2. Schwebekörper-Durchflußmesser nach Anspruch 1, dadurch gekennzeichnet, daß das Verhältnis von Lochstärke zu Lochdurchmesser zwischen 0,1 und 0,3, vorzugsweise bei etwa 0,2 liegt.

3. Schwebekörper-Durchflußmesser mit einem von dem zu messenden Medium zu durchströmenden rohrförmigen Gehäuse (17) und einem in dem Gehäuse (17) durch die Strömung des Mediums anhebbaren und innerhalb des Gehäuses (17) unter Freihaltung eines ihn umgebenden Ringspaltes axial geführten federbelasteten Schwebekörper (1), welcher einen einen inneren axial durchgängigen Strömungskanal (2) bildenden Hohlzylinder (3) aufweist, dessen engste Stelle von dem Loch (18) einer Lochscheibe (4) mit geringem, während der Axialbewegung des Schwebekörpers (1) unverändert freien Lochquerschnitt gebildet ist, dadurch gekennzeichnet, daß für einen Durchflußmengenbereich zwischen etwa 2 und 20 l/min und darüber das Verhältnis von Lochstärke zu Lochdurchmesser etwa gleich 1 ist.

4. Schwebekörper-Durchflußmesser nach einem der Ansprüche 1 bis 3 dadurch gekennzeichnet, daß die Lochstärke des Loches (18) zwischen 0,01 und 10 mm liegt.

5. Schwebekörper-Durchflußmesser nach einem der Ansprüche 1 bis 4, dadurch gekennzeichnet, daß der den Schwebekörper (1) umgebende Ringspalt (19) eine Breite zwischen 0,01 und 0,3 mm, vorzugsweise von etwa 0,05 mm hat.

6. Schwebekörper-Durchflußmesser nach einem der Ansprüche 1 bis 5, dadurch gekennzeichnet, daß das Verhältnis von Lochdurchmesser und Durchmesser der wirksamen Anströmkreisringfläche (5) der Lochscheibe (4) zwischen 0,01 und 0,95, vorzugsweise zwischen 0,04 und 0,4 liegt.

7. Schwebekörper-Durchflußmesser nach einem der Ansprüche 1 bis 6, dadurch gekennzeichnet, daß die Lochberandung (20) vorzugsweise halbkreisförmig abgerundet ist.

8. Schwebekörper-Durchflußmesser nach einem der Ansprüche 1 bis 7, dadurch gekennzeichnet, daß die Lochscheibe (4) als gesondertes Bauteil in dem Hohlzylinder (3) austauschbar gehalten ist.

9. Schwebekörper-Durchflußmesser nach einem der Ansprüche 1 bis 8, dadurch gekennzeichnet, daß in dem Hohlzylinder (3) in Strömungsrichtung vor und/oder hinter der Lochscheibe (4) ein oder mehrere, vorzugsweise axial magnetisierte, Magnetringe (6) mit einer Durchtrittsöffnung (7) angeordnet sind, deren Innendurchmesser den Lochdurchmesser der Lochscheibe (4) wesentlich übersteigt.

10. Schwebekörper-Durchflußmesser nach einem der Ansprüche 1 bis 9, dadurch gekennzeichnet, daß die Lochscheibe (4) als, vorzugsweise axial magnetisierte, Magnetscheibe ausgebildet ist.

11. Schwebekörper-Durchflußmesser nach einem der Ansprüche 1 bis 10, dadurch gekennzeichnet, daß die Lochscheibe (4) und/oder der wenigstens eine Magnetring (6) auf einem Stützring (8) mit einer Durchtrittsöffnung (9), deren Innendurchmesser den Lochdurchmesser der Lochscheibe (9) wesentlich übersteigt, und/oder einer Innenschulter (10) des Hohlzylinders (3) gehalten ist.

12. Schwebekörper-Durchflußmesser nach Anspruch 11, dadurch gekennzeichnet, daß sich der Stützring (8) auf einer Innenschulter (10) des Hohlzylinders (3) abstützt.

13. Schwebekörper-Durchflußmesser nach Anspruch 11 oder 12, dadurch gekennzeichnet, daß die Innenschulter (10) der Strömungsaustrittsöffnung (11) des Hohlzylinders (3) zugewandt ist.

14. Schwebekörper-Durchflußmesser nach einem der Ansprüche 11 bis 13, dadurch gekennzeichnet, daß die Lochscheibe (4) von einem Haltering (12) mit einer Durchtrittsöffnung (13), deren Innendurchmesser den Lochdurchmesser der Lochscheibe (4) wesentlich übersteigt, an der Innenschulter (10) oder dem Stützring (8) bzw. dem wenigstens einen Magnetring (6) auf der der Strömungsaustrittsöffnung (11) des Hohlzylinders (3) zugewandten Seite anliegend in dem Hohlzylinder (3) gehalten ist.

15. Schwebekörper-Durchflußmesser nach Anspruch 14, dadurch gekennzeichnet, daß der Haltering (12) mit einem äußeren Dichtungsring (14) in den Hohlzylinder (3) formschlüssig und kraftschlüssig einsetzbar ist.

16. Schwebekörper-Durchflußmesser nach einem der Ansprüche 1 bis 15, wobei der Schwebekörper (1) an einer Feder (15) hängend und/oder sich auf einer Feder abstützend in dem über seine Länge mit im wesentlichen gleichen Innendurchmesser ausgestatteten Gehäuse (17) axial verschieblich, aber mit nur durch den geringen Ringspalt (19) bedingten radialen Spiel angeordnet ist, dadurch gekennzeichnet, daß die Feder (15) als konische Schraubenlinienfeder ausgebildet ist.

17. Schwebekörper-Durchflußmesser nach einem der Ansprüche 11 bis 16, dadurch gekennzeichnet, daß sich der Stützring (8) anströmseitig, vorzugsweise von der Innenwandfläche des Hohlzylinders (3) bis zu seiner Durchtrittsöffnung (9), in Strömungsrichtung konisch verjüngt.

18. Schwebekörper-Durchflußmesser nach einem der Ansprüche 11 bis 17, dadurch gekennzeichnet, daß der Stützring (8) auf seiner der Strömungsaustrittsöffnung (11) des Hohlzylinders (3) zugewandten Seite einen Zentrierkragen (16) für den wenigstens einen Magnetring (6) aufweist.

19. Schwebekörper-Durchflußmesser nach einem der Ansprüche 11 bis 18, dadurch gekennzeichnet, daß der Stützring (8) und/oder der wenigstens eine Magnetring (6) und/oder die Lochscheibe (4) unter vernachlässigbarem radialen Spiel in das Innere des Hohlzylinders (3) einsetzbar und dort, z.B. zwischen der Innenschulter (10) und dem Haltering (12), axial festlegbar sind.

0144555